# EUROPEAN PATENT APPLICATION

(11) **EP 1 894 782 A2**
(43) Date of publication of application: **05.03.2008**
(21) Application number: 07017035.2
(22) Date of filing: 30.08.2007
(51) Int. Cl.: B60R 1/074, B60R 1/07

(54) **Mirror apparatus for use in vehicles**

(30) Priority: 04.09.2006 JP 2006239034
(71) Applicant: ICHIKOH INDUSTRIES, LTD., Shinagawa-ku, Tokyo 141-8627 (JP)
(72) Inventor: Sho, Yuji, Isehara-shi, Kanagawa-ken 259-1192 (JP); Ogawa, Takashi, Isehara-shi, Kanagawa-ken 259-1192 (JP)
(74) Representative: Grünecker, Kinkeldey, Stockmair & Schwanhäusser Anwaltssozietät

(57) **Abstract**

A mirror apparatus for use in a vehicle includes a base member (2) that is used for fixing to the vehicle and a main member (3) that is pivotably attached to the base member (2). The main member (3) includes a mirror (32), a motor (421) that performs pivoting of the main member (3) with respect to the base member (2), and a voltage regulating unit (414) that regulates a voltage received from an outside power supply to a constant voltage, and supplies the constant voltage to the motor (421) to drive the motor (421).

## Description

### CROSS-REFERENCE TO RELATED APPLICATIONS

The present application claims priority to and incorporates by reference the entire contents of Japanese priority document, 2006-239034 filed in Japan on September 4, 2006.

### BACKGROUND OF THE INVENTION

### 1. Field of the Invention

The present invention generally relates to a mirror apparatus for use in vehicles. The present invention specifically relates to a pivotable mirror apparatus.

### 2. Description of the Related Art

Some of the mirror apparatuses for use in vehicles can be electrically opened to an open position and/or closed to a closed to a closed position. Such a mirror apparatus is fixed to an outer surface of the body of the vehicle. A motor arranged inside the mirror apparatus is used to pivot the mirror apparatus between the open and closed position, and the motor is controlled with a switch from inside of the vehicle. Power to drive the motor is supplied from inside of the vehicle.

If the voltage applied to the motor fluctuates, the rotating speed of a motor varies. When the voltage applied to the motor increases, the rotating speed of the motor also increases thereby generating noise at times. On the other hand, when the voltage applied to the motor decreases, the rotating speed of the mirror also decreases thereby requiring more time to open or close the mirror.

For example, when the load relative to the rotating speed is substantially uniform and if the supplied voltage fluctuates in the range of ±20%, the rotating speed also varies by substantial 20%. As a result, when the rotating speed decreases by 20% due to decrease in the voltage applied to the motor, the time to open or close the mirror increases by 20%. On the other hand, when the rotating speed increases by 20% due to increase in the voltage applied to the motor, the noise increases at the time of opening or closing the mirror.

Japanese Patent Application Laid-Open No. 2005-193889 discloses a conventional mirror apparatus that regulates the power supply to the motor to control the pivoting movement of the mirror. The conventional mirror apparatus includes a mirror that is pivotably attached to a vehicle and pivoted in a predetermined direction by the driving force of a motor.. Moreover, the mirror apparatus includes a switching unit, a timer circuit, and an applied-voltage stabilizing circuit. When a voltage higher than a predetermined value is applied to the switching unit, the switching unit supplies the voltage to the motor as a driving voltage. On the other hand, when no voltage is applied to the switching unit, the switching unit stops supplying voltage to the motor. The timer circuit includes a resistor, a capacitor, and a switching element. The capacitor gets charged corresponding to the voltage that is higher than the predetermined amount and applied to the switching unit. When the voltage in the capacitor exceeds a predetermined voltage, the timer circuit instructs the switching circuit to stop supplying the driving voltage to the motor. The applied-voltage stabilizing circuit regulates the voltage applied to the switching circuit, the capacitor, and the resistor such that the applied voltage is maintained constant.

### SUMMARY OF THE INVENTION

It is an object of the present invention to at least partially solve the problems in the conventional technology.

According to an aspect of the present invention, there is provided a mirror apparatus for use in a vehicle including a base member that is used for fixing to the vehicle; and a main member that is pivotably attached to the base member. The main member includes a mirror; a motor that performs pivoting of the main member with respect to the base member; and a voltage regulating unit that regulates a voltage received from an outside power supply to a constant voltage, and supplies the constant voltage to the motor to drive the motor.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a perspective view of a mirror apparatus for use in vehicles according to an embodiment of the present invention;
Fig. 2 is a perspective view for explaining pivoting movement of the mirror apparatus shown in Fig. 1;
Fig. 3 is block diagram of a mirror-pivoting control unit that is included in the mirror apparatus shown in Fig. 1;
Fig. 4 is an exemplary circuit diagram of the mirror-pivoting control unit shown in Fig. 3; and
Fig. 5 is another exemplary circuit diagram of the mirror-pivoting control unit shown in Fig. 3.

### DETAILED DESCRIPTION OF THE PREFERRED EMBODIMENTS

Exemplary embodiments of the present invention are described in detail below with reference to the accompanying drawings. The present invention is not limited to these exemplary embodiments. Although the invention has been described with respect to predetermined embodiments for a complete and clear disclosure, the appended claims are not to be thus limited but are to be construed as embodying all modifications and alternative constructions that may occur to one skilled in the art which fairly fall within the basic teaching herein set forth.

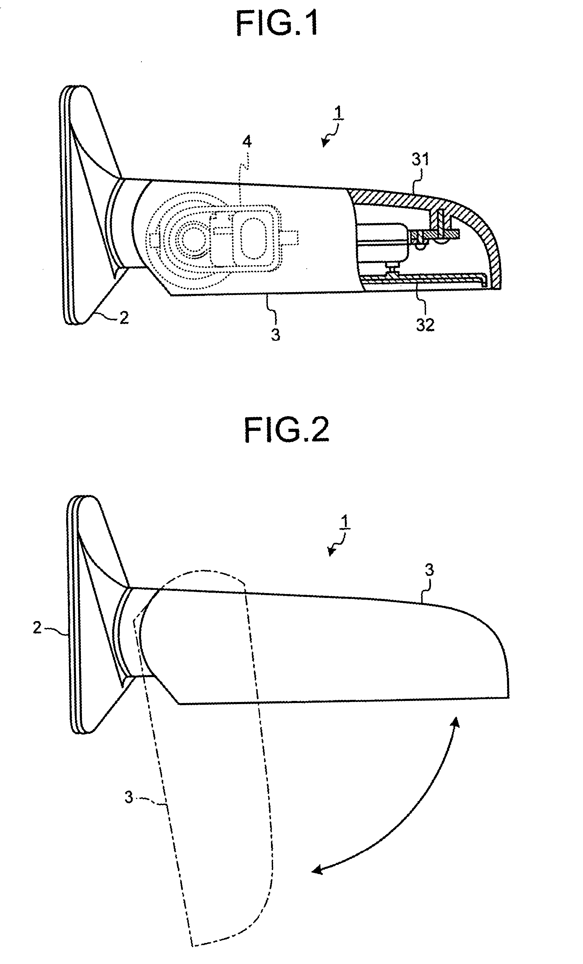

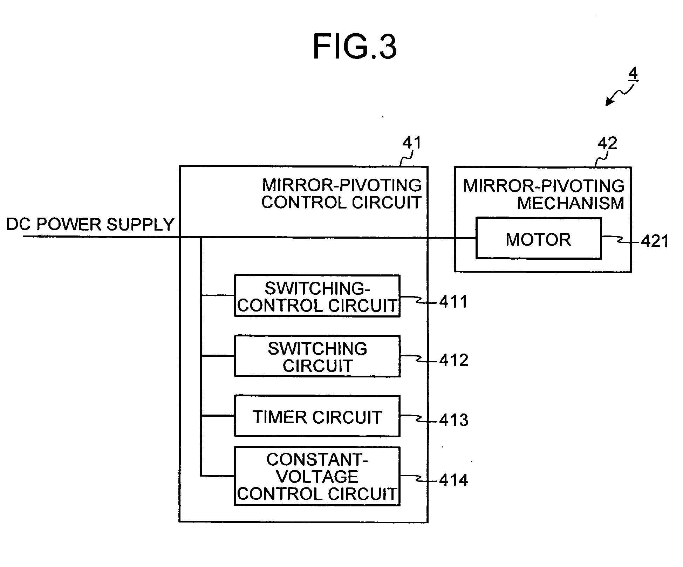

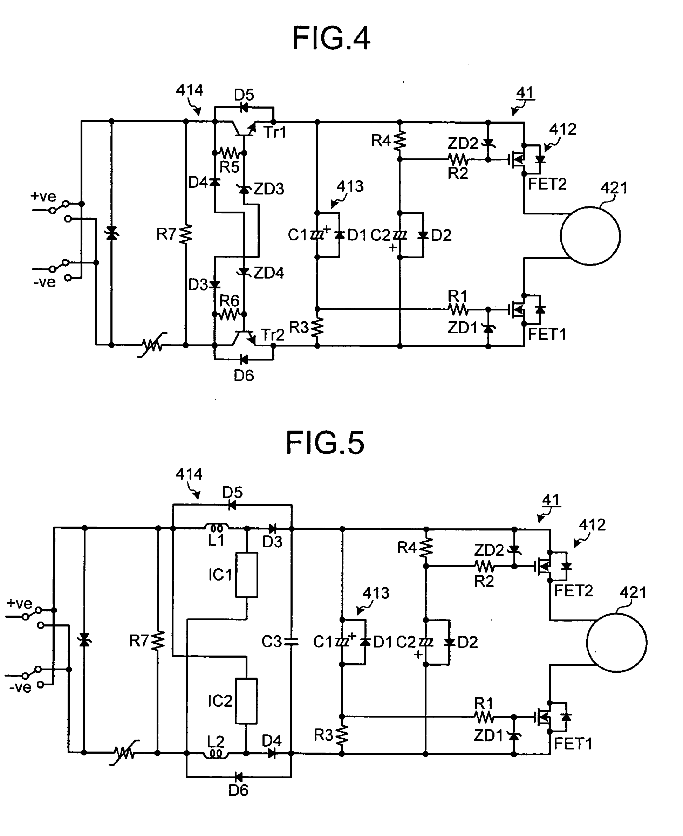

Fig. 1 is a perspective view of a mirror apparatus 1 for use in vehicles according to an embodiment of the present invention. Fig. 2 is a perspective view for explaining pivoting movement of the mirror apparatus 1. Fig. 3 is block diagram of a mirror-pivoting control unit 4 that is included in the mirror apparatus 1. Fig. 4 is an exemplary circuit diagram of the mirror-pivoting control unit 4. Fig. 5 is another exemplary circuit diagram of the mirror-pivoting control unit 4.

The mirror apparatus 1 is used in a vehicle as, e.g., an automatic side mirror (wing mirror). The mirror apparatus 1 includes a base member 2, a main unit 3, and the mirror-pivoting control unit 4. The base member 2 can be fixed to a door (not shown) of the vehicle. The main unit 3 includes a mirror case 31, and a mirror 32 that is encased in the mirror case 31. The main unit 3 is pivotably attached to the base member 2 as shown in Fig. 2. The mirror-pivoting control unit 4 is arranged inside the mirror case 31 of the main unit 3 and it controls the pivoting movement of the main unit 3 with respect to the base member 2. As shown in Fig. 3, the mirror-pivoting control unit 4 includes a mirror-pivoting control circuit 41 and a mirror-pivoting mechanism 42. The mirror-pivoting control circuit 41 controls the operations of the mirror-pivoting mechanism 42. The mirror-pivoting control circuit 41 is connected to direct-current (DC) power supply. The DC power supply is taken from the vehicle. The mirror-pivoting mechanism 42 includes a motor 421 and a plurality of gears (not shown) that are coupled with the motor 421. The gears convey the rotations of the motor 421 to the main unit 3 such that the main unit 3, which includes the mirror 32, pivots with respect to the base member 2 in synchronization with the rotations of the motor 421.

To use the mirror apparatus 1, the mirror-pivoting control unit 4 is operated by using a switch, which is generally located inside the vehicle, such that the mirror-pivoting control unit 4 opens the main unit 3 outwards to an open position, as shown by a solid line in Fig. 2. The main unit 3 in the open position makes a predetermined angle with respect to the body of the vehicle. When the main unit 3 is in the open position, the mirror 32 is clearly visible to the driver of the vehicle. On the other hand, to close the mirror apparatus 1, the mirror-pivoting control unit 4 is operated by using the switch, which is located inside the vehicle, such that the mirror-pivoting control unit 4 closes the main unit 3 inwards to a closed position, as shown by a dotted line in Fig. 2. The main unit 3 in the closed position makes a predetermined angle with respect to the body of the vehicle. The angle made by the main unit 3 in the closed position with respect to the base member 2 is smaller than the angle made by the main unit 3 when in the open position. To use the mirror apparatus 1 again, the main unit 3 is reopened to the open position by operating the switch.

As shown in Fig. 3, the mirror-pivoting control circuit 41 includes a switching-control circuit 411, a switching circuit 412, a timer circuit 413, and a constant-voltage control circuit 414. The switching-control circuit 411 controls the switching of the switching circuit 412 between an ON state and an OFF state. When the switching circuit 412 is in the ON state, there is a continuous voltage supply to the motor 421 so that the motor 421 rotates. On the other hand, when the switching circuit 412 is in the OFF state, the power supply to the motor 421 is cut off so that the motor 421 stops rotating. The timer circuit 413 sets a timing at which the switching circuit 412 is switched to the OFF state. The constant-voltage control circuit 414 regulates input voltage input from the DC power supply to a predetermined constant voltage. For example, when the input voltage is higher than a predetermined voltage, the constant-voltage control circuit 414 steps down the input voltage to the predetermined voltage and then supplies the input voltage to the switching-control circuit 411, the switching circuit 412, and the timer circuit 413. On the other hand, when the input voltage is lower than the predetermined voltage, the constant-voltage control circuit 414 steps up the input voltage to the predetermined voltage and then supplies the input voltage to the switching-control circuit 411, the switching circuit 412, and the timer circuit 413.

The mirror-pivoting control circuit 41 receives the input voltage from the DC power supply at least at the time of opening or closing the main unit 3. The constant-voltage control circuit 414 regulates the input voltage to the predetermined voltage by stepping up or stepping down the input voltage. The regulated voltage is then applied to the switching-control circuit 411 thereby switching the switching circuit 412 to the ON state. As a result, the motor 421 starts rotating and the mirror apparatus 1 is opened or closed. The regulated voltage is also applied to the timer circuit 413 such that the timer circuit 413 sets a timing at which the switching circuit 412 is switched to the OFF state. When the switching circuit 412 switches to the OFF state, the power supply to the motor 421 is cut off thereby stopping the rotation of the motor 421.

Thus, the constant-voltage control circuit 414 first regulates the input voltage to a predetermined voltage. Subsequently, the motor 421 receives only the regulated voltage from the constant-voltage control circuit 414. As a result, irrespective of the fluctuation in the input voltage, the predetermined voltage is always applied to the motor 421 so that the motor 421 always rotates at a constant speed. Such configuration helps in stabilizing the rotating speed of the motor 421 in the mirror apparatus 1.

Because the motor 421 always receives a constant voltage and rotates at a constant speed, the configuration of the motor 421 and the gears in the mirror-pivoting mechanism 42 can be optimized for the constant voltage and/or the constant speed. Moreover, the lock current (initial current) of the motor 421 also becomes constant. As a result, the initial time required to start rotating the motor 421 is secured and the lock current is accurately detected. Consider a case in which rotation of a motor is controlled by detecting the lock current with the help of a shunt resistor. Usually, if the input voltage fluctuates in the range of ±20%, the lock current of the motor also varies by 20%. Hence, if the input voltage decreases, the lock current does not reach the detection level. On the other hand, if the input voltage increases, the detection sensitivity of the lock current increases so much that the lock current is detected even before the motor attains a proper rotating speed. As a result, the motor with a nonuniform lock current may not rotate properly.

As described above, the constant-voltage control circuit 414 regulates the input voltage to a constant voltage and supplies the constant voltage to the timer circuit 413. Thus, the operation time of the timer circuit 413 is stabilized. However, if the mirror apparatus 1 is configured without the constant-voltage control circuit 414 and if the voltage from the power supply unit 10 fluctuates, then the operation time of the timer circuit 413 also varies depending on the voltage fluctuation. Hence, at the time of stopping the rotation of the motor 421, the power supply to the motor 421 is not properly cut off.

Fig. 4 is an exemplary circuit diagram of the mirror-pivoting control circuit 41. At the time of closing (or opening) the main unit 3, the positive terminal of the DC power supply is connected to the upper line of the mirror-pivoting control circuit 41 in Fig. 4, while the negative terminal of the DC power supply is connected to the lower line of the mirror-pivoting control circuit 41 in Fig. 4. On the other hand, at the time of opening (or closing) the main unit 3, the connection is made the opposite way (not shown in Fig. 4). Given below is the description when the positive terminal of the power supply unit 10 is connected to the upper line of the mirror-pivoting control circuit 41 in Fig. 4.

The switching circuit 412 shown in Fig. 4 includes a switching element FET1; and a switching element FET2. When the switching element FET1 is in the ON state, a voltage is supplied to the motor 421 whereby the motor 421 rotates. When the switching element FET1 is in the OFF state, the voltage supply to the motor 421 is cut off whereby the motor 421 stops rotating. Thus, the voltage supply to the motor 421 can be controlled by using the switching element FET1.

The timer circuit 413 shown in Fig. 4 includes a set of a capacitor C1, a diode D1, and a resistor R3; and a set of a capacitor C2, a diode D2, and a resistor R4. In the timer circuit 413, the voltage gets divided between the capacitor C1 and resistor R3, and the divided voltage is applied to the switching circuit 412. That is, initially, the voltage at the resistor R3 is high. However, as the time passes, the capacitor C1 gets charged with the voltage at the resistor R3, thereby decreasing the voltage at the resistor R3. When the voltage at the resistor R3 falls below the threshold of the switching element FET1, the switching element FET1 switches to the OFF state. Subsequently, voltage supply to the motor 421 is cut off whereby the motor 421 stops rotating.

The constant-voltage control circuit 414 shown in Fig. 4 includes a set of a transistor Tr1, a resistor R5, and a zener diode ZD3; and a set of a transistor Tr2, a resistor R6, and a zener diode ZD4. In the constant-voltage control circuit 414, a predetermined voltage is determined by the transistor Tr1 and the zener diode ZD3. In the circuit diagram shown in Fig. 4, the predetermined voltage is set to be lower than the input voltage, which is the voltage of the DC power supply. That is, the mirror-pivoting control circuit 41 in Fig. 4 is applicable when the input voltage is higher than the predetermined voltage in the constant-voltage control circuit 414. Hence, upon receiving the input voltage, the constant-voltage control circuit 414 steps down that voltage depending on the predetermined voltage. The constant-voltage control circuit 414 then supplies the stepped-down voltage to the remaining circuits that are arranged on a closer side to the motor 421 than the constant-voltage control circuit 414. Thus, the motor 421 always receives a constant voltage in the form of the stepped-down voltage. That helps in stabilizing the rotating speed of the motor 421.

Fig. 5 is another circuit diagram of the mirror-pivoting control circuit 41. In the circuit diagram shown in Fig. 5, a predetermined voltage in the constant-voltage control circuit 414 is set to be higher than the input voltage. That is, the mirror-pivoting control circuit 41 in Fig. 5 is applicable when the input voltage is lower than the predetermined voltage in the constant-voltage control circuit 414.

The constant-voltage control circuit 414 in the mirror-pivoting control circuit 41 shown in Fig. 5 includes a set of a step-up chopper control circuit IC1, a choke coil L1, and a diode D3; and a set of a step-up chopper control circuit IC2, a choke coil L2, and a diode D4. The step-up chopper control circuit IC1 controls the voltage supply to the choke coil L1. When the voltage supply to the choke coil L1 is cut off, i.e. when the choke coil L1 is in an OFF state, a high voltage is generated due to an induced current. That high voltage is supplied via the diode D3 to the remaining circuits that are arranged on a closer side to the motor 421 than the constant-voltage control circuit 414. A capacitor C3 of the timer circuit 413 shown in Fig. 5 also gets charged with the high voltage.

That is, in Fig. 5, when the input voltage is lower than the predetermined voltage in the constant-voltage control circuit 414, the constant-voltage control circuit 414 steps up the input voltage. The stepped-up voltage is then supplied to the motor 421. Thus, the motor 421 always receives a constant voltage in the form of the stepped-up voltage, which is sufficient for rotating the motor 421. Such configuration helps in stabilizing the rotating speed of the motor 421. Moreover, because the capacitor C3 of the timer circuit 413 also gets charged with the stepped-up voltage, the operation time of the timer circuit 413 is also stabilized.

In the mirror apparatus, irrespective of the fluctuation in the input voltage, a constant voltage is applied to the motor so that the motor always rotates stably at a constant speed at the time of opening or closing the mirror.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A mirror apparatus for use in a vehicle, the mirror apparatus comprising:
a base member (2) that is used for fixing to the vehicle; and
a main member (3) that is pivotably attached to the base member (2), wherein the main member (3) includes
a mirror (32);
a motor (421) that performs pivoting of the main member (3) with respect to the base member (2); and
a voltage regulating unit (414) that regulates a voltage received from an outside power supply to a constant voltage, and supplies the constant voltage to the motor (421) to drive the motor (421).

2. The mirror apparatus according to claim 1, further comprising:
a switch (412) configured to switch between an ON state and an OFF state, wherein the constant voltage is supplied to the motor (421) when the switch (412) is in the ON state, and the constant voltage is not supplied to the motor (421) when the switch is in the OFF state (412); and
a timer unit (413) that sets a timing at which the switch (412) is switched to the OFF state from the ON state, wherein
the voltage regulating unit (414) supplies the constant voltage to the timer unit (413).

3. The mirror apparatus according to claim 1, wherein the voltage regulating unit (414) regulates the voltage by stepping up the voltage when the voltage is lower than the constant voltage and regulates the voltage by stepping down the voltage when the voltage is higher than the constant voltage.
